# EUROPÄISCHE PATENTSCHRIFT

(11) **EP 2 088 059 B1**
(45) Veröffentlichungstag und Bekanntmachung des Hinweises auf die Patenterteilung: **29.06.2011**
(21) Anmeldenummer: 09000751.9
(22) Anmeldetag: 21.01.2009
(51) Int. Cl.: B62D 5/04

(54) **Kraftfahrzeug**
Motor vehicle
Véhicule automobile

(30) Priorität: 08.02.2008 DE 102008008182
(43) Veröffentlichungstag der Anmeldung: 12.08.2009
(73) Patentinhaber: Audi AG, 85045 Ingolstadt (DE)
(72) Erfinder: Limbacher, Reimund, 85055 Ingolstadt (DE); Reichel, Michael, 85049 Ingolstadt (DE)
(74) Vertreter: Thielmann, Frank

(56) Entgegenhaltungen:
- EP-A- 1 087 360
- DE-A1- 10 142 366
- DE-A1- 10 160 716
- DE-A1-102005 007 307

## Beschreibung

Die Erfindung betrifft ein Kraftfahrzeug mit den Merkmalen des Oberbegriffs des Patentanspruchs 1.

Moderne Kraftfahrzeuge weisen häufig ein Fahrerassistenzsystem auf, dem eine Querführungsaufgabe zukommt. Ein solches Fahrerassistenzsystem zeichnet sich üblicherweise durch eine Kamera aus, die das Fahrzeugvorfeld aufnimmt und aus welchen Informationen eine geeignete Steuerungseinrichtung die Position des Fahrzeugs relativ zu seitlichen Fahrspurbegrenzungen bestimmt. Ergibt sich hieraus, dass ein unbeabsichtigtes Verlassen der befahrenen Fahrspur eintreten kann, nimmt das Assistenzsystem seine Querführungsaufgabe wahr. Bekannt sind dabei passive Systeme, die bei Erfassen einer solchen Situation lediglich ein Warnsignal geben, und aktive Systeme, die dem Halten des Fahrzeugs in der Fahrspurmitte dienen, also aktiv Lenkeingriffe zur Querführung vornehmen. Ein Beispiel für ein passives Querführungssystem ist das sogenannte LDW-System (LDW = Lane Departure Warning). In der einfachsten Ausprägung gibt dieses Fahrerassistenzsystem bei Erfassen einer möglichen Gefahrensituation lediglich ein Warnsignal, üblicherweise in Form einer über das Lenkrad gegebene Vibrationswarnung, aus, um den Fahrer vor dem Spurverlassen zu warnen. Eine weiterentwickelte Ausführung des LDW-Systems appliziert zusätzlich über eine geeignete Einrichtung ein Lenkmoment, welches das Auto quasi intermittierend wieder zurück in die Fahrspur "stupst". Aktive Fahrerassistenzsysteme wie das HC-System (HC = Heading Control) dienen dem Halten in der Fahrspurmitte. In einer ersten einfacheren Systemausgestaltung ist innerhalb der Fahrspur ein sogenannter Fairway definiert, innerhalb dem das System inaktiv ist. Erst ab einem bestimmten Abstand von der Fahrspurmitte regelt das System das Fahrzeug durch Gabe eines Lenkmoments zur aktiven Lenkbeeinflussung wieder zurück, so dass das Fahrzeug quasi immer innerhalb des definierten Fairways verbleibt. Eine weitere entwickelte HC-Systemsstufe arbeitet ohne einen definierten Fairway und regelt quasi kontinuierlich das Fahrzeug in die Fahrbahnmitte, erzeugt also kontinuierlich Lenkmomente, um das Fahrzeug aktiv in der Mitte zu führen. Diese am tiefsten ausgeprägte Systemausführung besitzt die beste Spurhaltegüte und ist aus regelungstechnischer Sicht die beste Alternative.

Mit solchen aktiven Querführungssystemen ist jedoch verbunden, dass der Fahrer die intermittierenden oder nahezu kontinuierlich gegebenen aktiven Lenkeingriffe selber erfährt, da er diese über das Lenkrad spürt. Denn infolge der festen Kopplung des Lenkrads mit dem Lenksystem und dem Umstand, dass die zur Gabe des Lenkmoments dienende Einrichtung das Lenkmoment an eine quer verschiebbare Steuerstange gibt, die mit den beiden zu lenkenden Vorderrädern bewegungsgekoppelt ist, mit der aber auch die Lenksäule und über diese das Lenkrad verbunden ist, ist eine direkte Bewegungskopplung zwischen der aktiven Querführungs-Lenkeinrichtung und dem Lenkrad und hierüber mit dem Fahrer gegeben. Für den Fahrer scheint damit das Lenkrad infolge der ständigen Lenkeingriffe quasi ein Eigenleben zu vermitteln. Weiterhin sinkt damit gegebenenfalls die Konzentration des Fahrers, nachdem er sich zunehmend auf das aktive System verlässt. Auch wird ein quasi "nervöses" Lenkrad häufig als störend und den Fahrkomfort vermindernd empfunden, was sich mitunter nachteilig auf die Akzeptanz eines solchen aus sicherheitstechnischer Sicht jedoch sehr guten Assistenzsystems auswirkt.

Ein Kraftfahrzeug, das die Merkmale des Oberbegriffs des Patentanspruchs 1 zeigt, ist aus DE 101 42 366 A1 bekannt.

Der Erfindung liegt damit das Problem zugrunde, ein Kraftfahrzeug anzugeben, das eine Möglichkeit zur aktiven Querführung im Rahmen eines Fahrerassistenzsystem bietet, ohne den Fahrer im Rahmen des Systembetriebs über Gebühr zu beeinflussen bzw. zu bevormunden.

Zur Lösung dieses Problems ist bei einem Kraftfahrzeug der eingangs genannten Art erfindungsgemäß vorgesehen, dass das Fahrerassistenzsystem eine Erfassungseinrichtung zur Ermittlung der Fahrspur umfasst und der aktiven Querführung des Fahrzeugs bei Erfassen einer vorbestimmten Relativposition des Kraftfahrzeugs zu einer Fahrspurbegrenzung dient, wobei die zumindest teilweise Kompensation nur bei Erfassen einer in einem definierten Teilbereich der systemseitig bestimmten Fahrspurbreite liegenden Relativposition des Kraftfahrzeugs erfolgt.

Die Erfindung ermöglicht eine zumindest teilweise Kompensation des zu der als störend empfundenen Lenkraddrehbewegung führenden, aus einem aktiven Querführungsbetrieb des Fahrerassistenzsystems resultierenden Lenkmoments durch die erfindungsgemäße Ansteuerung eines der Lenksäule zugeordneten Überlagerungsgetriebes, über das ein quasi kompensierendes "Gegenlenkmoment" erzeugt und an die Lenksäule gegeben wird, so dass die resultierenden Lenkraddrehbewegung verglichen mit der sich aus dem über die Fahrerassistenz-Einrichtung gegebenen Lenkmoment theoretisch ergebenden Lenkraddrehbewegung geringer ist oder wie besonders bevorzugt ist es zu einer vollständigen Kompensation kommt.

Überlagerungsgetriebe oder Überlagerungslenkungen bei Kraftfahrzeugen sind bekannt, siehe hierzu beispielsweise WO 2005/054035 A1. Solche Überlagerungsgetriebe oder Überlagerungslenkungen zeichnen sich dadurch aus, dass dem vom Fahrer über das Lenkrad und die Lenksäule gewählten Lenkwinkel bei Bedarf ein weiterer Lenkwinkel durch einen Stellmotor, der dem Überlagerungsgetriebe zugeordnet ist, überlagert werden kann. Der Stellmotor und damit der weitere Drehwinkel, der positiv, also vergrößernd, oder negativ, also verkleinernd sein kann, wird durch eine geeignete Steuerungs- oder Regelungseinrichtung gesteuert und dient zur Erhöhung der Fahrstabilität des Fahrzeugs. Es ist bekannt, ein solches Überlagerungsgetriebe z. B. als Planetenradgetriebe auszuführen, wobei die Lenksäule, die mit einer ersten Getriebeeingangswelle verbunden ist, axial unterbrochen ist und von einem Stufenplaneten, der sich um Sonnenräder der Lenksäulenteile bewegt, drehbar verbunden wird. Die Stufenplaneten wiederum sind in einem Planetenradträger gelagert, der seinerseits mit einem Schrauben- oder Schneckengetriebe um die Lenksäule und deren Sonnenräder bewegbar ist. Die Drehbewegung des Planetenradträgers wiederum wird mit Hilfe einer Schraube oder Schnecke an einer zweiten Getriebeeingangswelle des Überlagerungsgetriebes abgeführt.

Alternativ ist der Einsatz eines servo-elektromotorischen Antriebs, der in eine Lenksäule integriert wird, bekannt. Dieser Antrieb weist ein Gehäuse auf, das mit einem ersten Abschnitt der Lenksäule verbunden ist, eine Antriebswelle ist mit einem zweiten Lenksäulenabschnitt verbunden. Der eine Abschnitt der Lenksäule ist dabei mit dem Lenkrad, der andere z. B. mit einem Lenkgetriebe verbunden. Durch den servo-elektrischen Antrieb ist die Antriebswelle relativ zu dem Antriebsgehäuse drehbar, um einen zusätzlichen Lenkwinkel zu erzeugen.

Eine dritte Ausführung eines Überlagerungsgetriebe sieht den Einsatz eines Überlagerungsgetriebes in Form eines Well- oder Pulsatorgetriebes auf, wobei auch hier ein Servomotor zum Einsatz kommt, über den als Stellelement der weitere Drehwinkel generiert wird. Obige Aufzählung ist nicht abschließend.

Es sind also ersichtlich unterschiedliche, dem Fachmann bekannte Ausführungsformen von Überlagerungsgetrieben bekannt, die zu dem erfindungsgemäßen Zweck eingesetzt werden können. Erfindungsgemäß wird nun dieses Überlagerungsgetriebe genutzt, wie beschrieben das "Gegenlenkmoment" zu erzeugen. Seitens des Fahrerassistenzsystems bzw. dessen Steuerungseinrichtung, über die die Einrichtung zur Gabe des Querführungs-Lenkmoments gesteuert wird, ist bekannt, in welcher Größenordnung das querführende Lenkmoment angelegt wird, woraus sich auch ergibt, wie groß der theoretische "Rücklenkwinkel" ist, der als Lenkraddrehbewegung am Lenkrad auftreten würde. Über diese Information wird nun der Stellmotor des Überlagerungsgetriebe angesteuert, um eine Gegendrehung im Überlagerungsgetriebe zu erzeugen, über die die aus der aktiven Querführungsstellbewegung resultierende Lenksäulendrehung kompensiert wird. Der Stellmotor und das Überlagerungsgetriebe laufen also quasi in die entgegengesetzte Richtung zur Querführungsbewegung. Dieses "Gegenlenkmoment" respektive diese "Gegendrehung" bewirkt nun mit besonderem Vorteil die Kompensation, so dass, je nachdem, wie der Kompensationsgrad ausgelegt wird, die tatsächliche Lenkraddrehbewegung trotz aktiver Querführung entweder weit geringer ist, als die theoretische Bewegung oder wie erfindungsgemäß vorgesehen ist, es zu einer vollständigen Kompensation kommt. Diese vollständige Kompensation wird bevorzugt, da dann sichergestellt ist, dass der Fahrer keinerlei aus einem aktiven Systemeingriff resultierende Lenkradbewegung spürt. D. h., dass die Steuerungseinrichtung den Stellmotor so ansteuert, dass die theoretische Lenkraddrehbewegung zu 100% ausgeglichen wird und das Lenkrad im Endeffekt still steht.

Wie bereits beschrieben umfasst das Fahrerassistenzsystem eine eigene Steuerungs- oder Regelungseinrichtung, die die Einrichtung zur Gabe des querführenden Lenkmoments an die quer verschiebliche Steuerstange ansteuert. Diese Steuerungseinrichtung kann nun gleichzeitig zum Ansteuern des Stellmotors des Überlagerungsgetriebes dienen. Sie ist in der Lage, aus den vorhandene Steuerinformationen für die Systemeinrichtung unmittelbar die Steuerinformationen für den Stellmotor für die gezielte "Rückdrehung" zu ermitteln. Denkbar wäre es aber auch, dass diese Steuerungseinrichtung mit einer lediglich zur Steuerung des Stellmotors dienenden Steuerungs- oder Regelungseinrichtung kommuniziert und die Steuerparameter für den Betrieb der Fahrerassistenzsystem-Einrichtung überträgt.

Wie bereits beschrieben, umfasst ein Fahrerassistenzsystem üblicherweise eine Erfassungseinrichtung zur Ermittlung der Fahrspur, vornehmlich in Form einer Kamera, die das Fahrzeugvorfeld aufnimmt, wobei das Kamerabild kontinuierlich in einer Steuerungseinrichtung ausgewertet wird und so die Fahrspur respektive deren Begrenzungen sowie die eigene Position des Kraftfahrzeugs erfasst wird. Nun ist es grundsätzlich möglich, die erfindungsgemäße teilweise oder vollständige Kompensation im gesamten Überwachungsbereich vorzunehmen, also stets zu kompensieren, unabhängig davon, wie nun die konkrete Relativposition des Kraftfahrzeugs zu den Fahrspurbegrenzungen ist. Um zu vermeiden, dass sich der Fahrer zu sehr auf das Fahrzeug respektive auf die aktive Querführung verlässt, sieht eine zweckmäßige Weiterbildung der Erfindung vor, dass das Fahrerassistenzsystem derart ausgebildet ist, dass die zumindest teilweise Kompensation nur bei Erfassen einer in einem definierten Teilbereich der systemseitig bestimmten Fahrspurbreite liegenden Relativposition des Fahrzeugs erfolgt, wobei dieser Teilbereich zweckmäßigerweise in der Fahrspurmitte liegt. D. h., dass das Lenkrad trotz aktiver Querführung nur dann still steht bzw. die Kompensation erfolgt, wenn das Fahrzeug von Haus aus relativ mittig fährt, d. h., sich im bevorzugt in der Fahrspurmitte liegenden Teilbereich der Fahrspur befindet. Bewegt sich das Fahrzeug jedoch außerhalb dieses definierten Teilbereichs, so soll trotz aktiver Querführung über das Fahrerassistenzsystem infolge der in diesem Bereich fehlenden Kompensation auch eine Warnfunktion erfolgen, indem der Fahrer eben haptisch die Lenkradbewegung, die aus der aktiven Querführung resultiert, spürt. Hierüber kann er erkennen, dass er außerhalb des definierten Teilbereichs fährt, jedoch die aktive Querführung greift. Er kann dann selber wieder aktiv in die Mitte zurücklenken, wo dann wiederum der Kompensationsbetrieb aktiv ist.

Wie bereits beschrieben, ist insbesondere im Bereich der Fahrspurbegrenzungen unbedingt die Aufmerksamkeit des Fahrers erforderlich, so dass er aktiv handeln und in den Lenkbetrieb eingreifen kann. Zu diesem Zweck sieht eine Weiterbildung der Erfindung vor, bei Erfassen einer in weiteren im Bereich der Fahrbahnbegrenzung liegenden definierten Teilbereichen der erfassten Fahrspurbreite liegenden Relativposition, gegebenenfalls zusätzlich zur aktiven Querführung, über ein akustisches und/oder haptisches und/oder optisches Anzeigemittel ein Warnsignal zu geben. Diese Erfindungsausgestaltung sieht also die zusätzliche Integration einer Warnfunktion, also einer LDW-Funktion am Fahrspurrand vor. Der Fahrer erhält hier in jedem Fall ein Warnsignal das bevorzugt haptisch über das Lenkrad gegeben wird, gegebenenfalls alternativ oder zusätzlich hierzu auch akustischer Form sein kann, wie auch ein optisches Warnsignal, z. B. über ein Head-Up-Display im Bereich der Windschutzscheibe, gegeben werden kann. In jedem Fall handelt es sich hierbei um ein echtes Warnsignal, das zum Informieren des Fahrers gegeben wird. Dieses Warnsignal kann entweder alternativ oder zusätzlich zu einer aktiven Querführung, die auch in diesem Bereich noch gegeben sein kann, um das Fahrzeug wieder automatisch aktiv zurückzuführen, gegeben werden.

Diese Erfindungsausgestaltung kombiniert also ein aktives Querführungssystem mit einem passiven, jedoch ebenfalls der Querführung dienenden reinen Warnsystem und bietet die Möglichkeit, die Systeme unabhängig voneinander und lediglich in Abhängigkeit der gegebenen Ist-Relativposition des Fahrzeugs bezogen auf die Fahrspurbreite zu betreiben.

Neben dem Kraftfahrzeug betrifft die Erfindung ferner ein Verfahren zum Betrieb eines Kraftfahrzeugs umfassend ein Lenkrad, eine über das Lenkrad drehbare Lenksäule, eine quer verschiebbare Steuerstange, die mit zwei zu lenkenden Rädern bewegungsgekoppelt ist, ein der Lenksäule zugeordnetes Überlagerungsgetriebe, über das ein durch Drehen des Lenkrads erzeugter Drehwinkel mit einem über einen mit dem Überlagerungsgetriebe gekoppelten Stellmotor erzeugten Drehwinkel zur Erzeugung eines der Bewegung der Steuerstange dienenden Überlagerungsdrehwinkels überlagerbar ist, sowie ein Fahrerassistenzsystem mit einer Einrichtung zum Geben eines separaten, der Bewegung der Steuerstange dienenden Lenkmoments zum aktiven Querführen des Kraftfahrzeugs, wobei das Fahrerassistenzsystem eine Erfassungseinrichtung zur Ermittlung der Fahrspur umfasst und der aktiven Querführung des Fahrzeugs bei Erfassen einer vorbestimmten Relativposition des Kraftfahrzeugs zu einer Fahrspurbegrenzung dient, wobei bei Erfassung einer in einem definierten ersten Teilbereich der systemseitig bestimmten Fahrspur liegenden Relativposition das Überlagerungsgetriebe über den Stellmotor derart verstellt wird, dass eine infolge der Gabe eines separaten Lenkmoments durch die Einrichtung verursachte Drehung der Lenksäule derart zumindest teilweise kompensiert wird, dass die resultierende tatsächliche Lenkraddrehbewegung verglichen mit der aus dem gegebenen Lenkmoment resultierenden theoretischen Lenkraddrehbewegung geringer ist, während bei Erfassung einer in einem oder zwei seitlich neben dem ersten Teilbereich liegenden zweiten Teilbereichen liegenden Relativposition lediglich eine aktive Querführung ohne kompensierender Verstellung des Überlagerungsgetriebes erfolgt, und wobei bei Erfassung einer in fahrspurrandseitig liegenden dritten Teilbereichen liegenden Relativposition anstelle oder zusätzlich zur aktiven Querführung ein akustisches und/oder optisches und/oder haptisches Warnsignal gegeben wird.

Das erfindungsgemäße Verfahren bietet die Möglichkeit, ein aktives Querführungssystem mit einem reinen Querführungs-Warnsystem zu kombinieren, also eine Kombination aus dem eingangs beschriebenen LDW-System mit dem beschriebenen HC-System, vorzugsweise dem kontinuierlichen HC-System der aufgeführten Ausbaustufe. Die erfasste Fahrspurbreite wird in drei Teilbereiche aufgeteilt, nämlich den ersten Teilbereich, der bevorzugt in der Fahrspurmitte liegt, und in dem die kompensierte aktive Querführung erfolgt. Bevorzugt zu beiden Seiten schließt sich jeweils ein zweiter Teilbereich an, indem eine aktive Querführung erfolgt, jedoch ohne Kompensation. Schließlich schließen sich die beiden dritten Teilbereich zur Seite im Bereich der Fahrspurränder hin an, in denen optimal die aktive Warnsignalgabe erfolgt. Die Fahrspur wird also erfindungsgemäß in vorteilhafter Weise so aufgeteilt, dass zum einen die beiden Systeme vorteilhaft miteinander gekoppelt sind und zusätzlich eine Lenkradbewegungskompensation gegeben ist, wobei diese jedoch nur auf einen bestimmten Teilbereich beschränkt ist, um den Fahrer so wenig wie möglich an den Systembetrieb zu gewöhnen und die Fahreraufmerksamkeit stets hoch zu halten.

Weitere Vorteile, Merkmale und Ausgestaltungen der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs als Seitenansicht,
- Fig. 2: eine Prinzipdarstellung eines erfindungsgemäßen Kraftfahr- zeugs als Aufsicht auf das Lenksystem und
- Fig. 3: eine Darstellung zur Aufteilung der Fahrspurbreite hinsichtlich der Betriebsbereitschaft der unterschiedlichen Assistenzsyste- me.

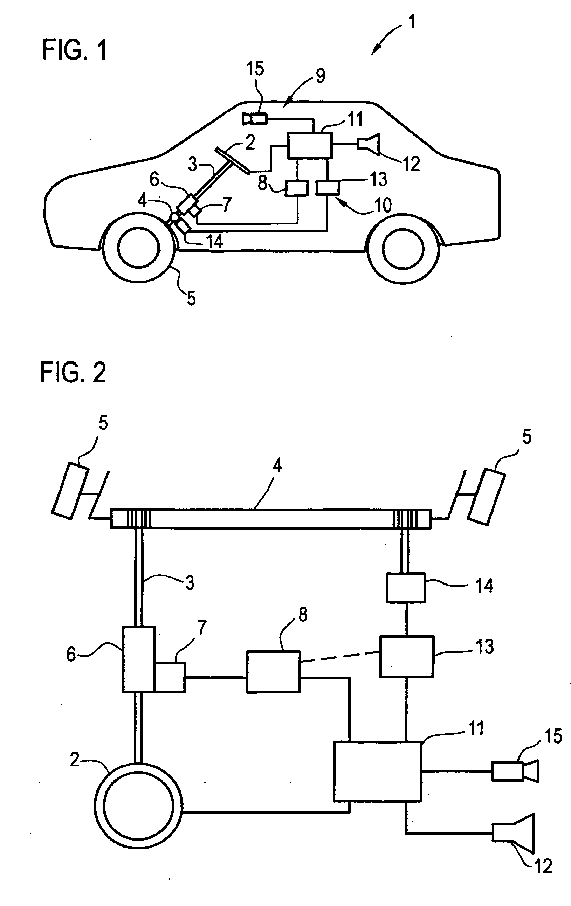

Fig. 1 zeigt ein erfindungsgemäßes Kraftfahrzeug 1, umfassend ein Lenkrad 2, eine Lenksäule 3, eine querbewegliche Steuerstange 4, über die die beiden Vorderräder 5 lenkbar sind, sowie ein Überlagerungsgetriebe 6 nebst zugeordnetem Stellmotor 7, über das im Bedarfsfall ein Überlagerungsdrehwinkel dem eigentlichen, über eine vom Fahrer veranlasste aktive Lenkraddrehung erzeugten Lenkwinkel überlagert werden kann. Der Stellmotor 7 wird hierzu über ein geeignetes Steuergerät 8 angesteuert. Das Überlagerungsgetriebe kann an einer beliebigen Stelle an der Lenksäule 3 angeordnet oder in diese integriert werden, je nach Ausgestaltung des Getriebes.

Vorgesehen sind ferner zwei Fahrerassistenzsysteme, nämlich ein erstes Fahrerassistenzsystem 9, das als Spurverlassenswarnsystem (LDW-System) ausgelegt ist, sowie ein zweites Fahrerassistenzsystem 10, das als aktives Lenk- oder Querführungssystem (HC-System) ausgelegt ist. Beide werden im gezeigten Beispiel von einer gemeinsamen Steuerungseinrichtung 11 gesteuert. Während das Fahrerassistenzsystem 9 als reines Warnsystem lediglich zum Erzeugen eines Warnsignals dient, beispielsweise dadurch, dass ein Vibrationssignal am Lenkrad 2 über das Steuergerät 11 erzeugt wird, oder dass über einen Lautsprecher oder ein Lautsprechersystem 12 eine akustische Warnung gegeben wird, dient das zweite Fahrerassistenzsystem 10 dazu, tatsächlich aktiv die Lenkbewegung der Vorderräder 5 zu steuern. Während das Fahrerassistenzsystem 9 allein von der Steuer- oder Regelungseinrichtung 11 gesteuert wird, wird das Fahrerassistenzsystem 10 von den Steuer- oder Regelungseinrichtungen 11 und 13 gesteuert. Für eine aktive Querführung kommuniziert die Steuerungseinrichtung 11 mit der Steuerungseinrichtung 13, die ihrerseits mit einer Einrichtung 14, die mit der querverschiebbaren Steuerstange 4 gekoppelt ist, in Verbindung steht. Hierzu kämmt beispielsweise eine Abtriebswelle der Einrichtung 14 mit einer entsprechenden Verzahnung der als Zahnstange ausgeführten Steuerstange 4. Ein aktiver Querführungseingriff erfolgt dann, wenn über eine Kamera 15, die das Fahrzeugvorfeld erfasst, und seitens der Steuerungseinrichtung 11 ermittelt wird, dass die Relativposition des Fahrzeugs bezogen auf die seitens der Steuerungseinrichtung 11 erfasste Fahrspurbreite so ist, dass eine aktive Querführung des Fahrzeugs zur Fahrerunterstützung erforderlich ist. In einem solchen Fall wird dann ohne Fahrertätigkeit über die Steuerungseinrichtung 13 und die Einrichtung 14 der Lenkbetrieb aktiv beeinflusst und eine Verstellung der Vorderräder 5 durch eine aktive Querverschiebung der Steuerstange 4 erreicht.

Demgegenüber warnt das erste Fahrerassistenzsystem 9 lediglich, und zwar dann, wenn die Gefahr droht, dass das Fahrzeug die Fahrspur verlässt, wenn also ermittelt wird, dass die Relativposition des Fahrzeugs derart bezüglich einer Fahrspurberandung liegt, dass in Kürze das Fahrzeug bei Fortsetzung der Fahrt über die Fahrspurberandung fährt. Auch dies wird in der Steuerungseinrichtung 11 basierend auf den Kamerabildern ermittelt.

Kommt es nun zu einem aktiven Querführungseingriff (wenn die Steuerungseinrichtung 11 die Steuerungseinrichtung 13 entsprechend ansteuert, die dann ihrerseits wiederum die Einrichtung 14 ansteuert, die dann die Steuerstange 4 verschiebt), so kommt es infolge der Bewegungskopplung der Lenksäule 3 mit der Steuerstange 4, auch hier beispielsweise über einen Verzahnungseingriff, infolge der Steuerstangenverschiebung zu einer Drehbewegung an der Lenksäule 3. Diese würde, wenn sie nicht in der erfindungsgemäßen Weise kompensiert werden würde, zu einer entsprechenden selbständigen Drehung des Lenkrads führen, resultierend aus der Bewegungskopplung der Lenksäule 3 mit der Steuerstange 4.

Um dies nun zu vermeiden, steuert die Steuerungseinrichtung 11 gleichzeitig zur Steuerungseinrichtung 13 auch die Steuerungseinrichtung 8 an, die dann ihrerseits den Stellenmotor 7 so ansteuert, dass das Überlagerungsgetriebe 6 einen zusätzlichen Drehwinkel erzeugt und der aus der aktiven Querführung resultierenden Lenksäulendrehung überlagert, so dass sich im Endeffekt ein Überlagerungsdrehwinkel an dem zum Lenkrad 2 führenden Lenksäulenabschnitt von 0° ergibt, dass also mithin das Lenkrad 2 trotz einer abschnittsweisen Lenksäulenverstellung nicht bewegt wird. Die Kompensation dieser Lenksäulenbewegung findet also letztlich im Überlagerungsgetriebe 6 statt. Das Überlagerungsgetriebe 6 kann beliebiger Natur oder Ausgestaltung sein, solange in Verbindung mit dem Stellmotorenbetrieb sichergestellt ist, dass ein "Gegendrehwinkel" bzw. ein "Gegenlenkwinkel" erzeugt werden kann, der dem aus der aktiven Querführung resultierenden, vom Fahrer quasi ungewollten Lenksäulendrehwinkel entgegengerichtet ist und diesen vorzugsweise vollständig kompensiert. An dieser Stelle sei darauf hingewiesen, dass die Steuerungseinrichtungen 8 und 13 nicht zwingend als separate Steuerungseinrichtung vorgesehen sein müssen. Vielmehr wäre es auch denkbar, eine zentrale Steuerungseinrichtung in Form der Steuerungseinrichtung 11 vorzusehen, das dann sowohl die beiden Fahrerassistenzsysteme 9, 10 bedient, wie auch die Steuerung der Querführungs-Einrichtung 14 und des Stellmotors 7 übernimmt. Denkbar wäre es jedoch auch, dass die beiden Steuerungseinrichtungen 8 und 13 miteinander kommunizieren, d. h., dass bei Ansteuerung der Steuerungseinrichtung 13 über die Steuerungseinrichtung 11 zur Erzeugung eines aktiven Quer-Lenkwinkels die Steuerungseinrichtung 13 ihrerseits die Steuerungseinrichtung 8 zur Erzeugung des entsprechenden Überlagerungs-Lenkwinkel ansteuert. D. h, dass letztlich der Kommunikationsbetrieb beliebig sein kann, je nachdem, welche Steuerungseinrichtungen verbaut sind, solange sichergestellt ist, dass die entsprechenden erforderlichen Steuerinformationen zeitnah an der jeweiligen Steuerungseinrichtung vorliegen. Anstelle der Gabe von Lenkwinkeln oder Lenkwinkeloffsets ist es auch denkbar, als Steuerparameter konkrete Lenkmomente zu übertragen.

Die erfindungsgemäße Lenkwinkel- oder Lenkmomentkompensation kann entweder immer erfolgen, also unabhängig von der tatsächlichen Position des Fahrzeugs bezogen auf die erfasste Fahrspurbreite. Zweckmäßig ist es jedoch, wenn die Kompensation nur in einem bestimmten Teilbereich der Fahrspur bzw. Fahrspurbreite erfolgt, während ansonsten die Kompensation nicht vorgenommen wird und der Fahrer zwangsläufig eine Lenkradbewegung im Falle eines Eingreifens der aktiven Querführung über das zweite Fahrerassistenzsystem 10 und die Einrichtung 14 spürt.

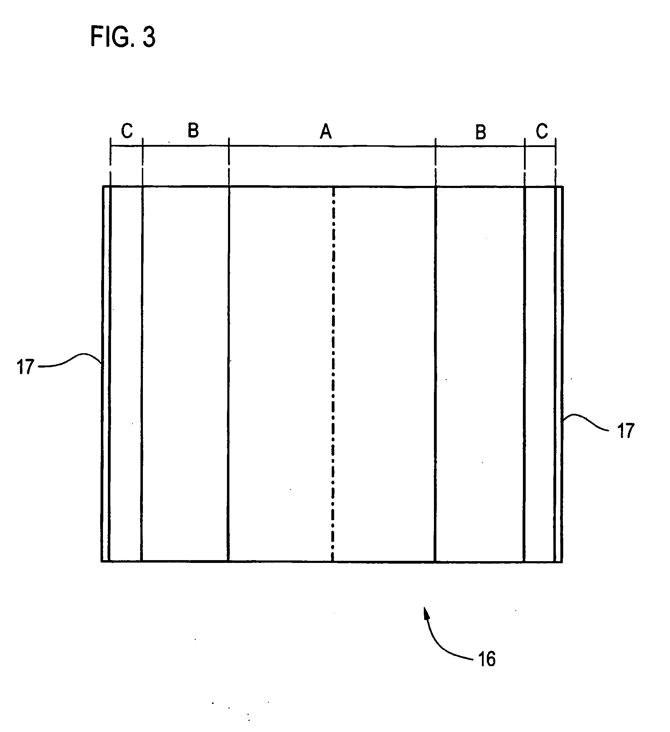

Fig. 3 zeigt ein Beispiel der Aufteilung einer Fahrspur 16 in entsprechende Teilbereich, die hier mit A, B und C definiert sind. Die Fahrspur 16 selber ist über zwei seitliche Fahrspurbegrenzungen 17, z. B. durchgehende oder gestrichelte Fahrbahnmarkierungen begrenzt und in ihrer Breite definiert. Diese Fahrbahnbegrenzungen 17 werden über die Steuerseinrichtung 13 aus den Kamerabildern erfasst, die Ist-Position des Fahrzeugs bezogen auf die Fahrspur 16 wird aus der bekannten Kameraposition über die Steuerungseinrichtung 11 ermittelt. Diese Funktionalität im Zusammenhang mit Fahrerassistenzsystemen (LDW-System, HC-System) ist hinlänglich bekannt.

Je nachdem, in welchem Teilbereich A, B oder C sich nun das Fahrzeug - bzw. ein ausgezeichneter Punkt am Fahrzeug, üblicherweise ein Punkt auf der Fahrzeuglängsachse - befindet, gestaltet sich der Steuervorgang anders. Ermittelt das Steuergerät 11 eine Relativposition des Fahrzeugs bzw. des ausgezeichneten Punktes im Teilbereich A, der in der Mitte der Fahrspur 16 liegt, so wird im Falle einer aktiven Querführung eine Kompensation vorgenommen, d. h., dass innerhalb dieses Bereichs A die Kompensationsfunktion aktiv ist. Eingriffe in das Lenksystem werden also am Lenkrad "ausgeblendet".

An den mittleren Teilbereich A schließen sich zu beiden Seiten die Teilbereiche B an. Wird eine Relativposition in einem dieser Bereiche B ermittelt, so ist die aktive Querführung zwar immer noch aktiv, d. h., das Fahrerassistenzsystem 10 versucht nach wie vor, das Fahrzeug aktiv wieder in die Fahrbahnmitte zurückzuführen. Eine Kompensation eines Lenksystemeingriffs erfolgt hier jedoch nicht mehr. D. h., der Fahrer erhält in diesem Falle eine Rückmeldung eines aktiven Lenkeingriffs über das Lenkrad 2, da die Lenkverstellung nicht mehr kompensiert wird.

In den Bereichen C, die sich zu beiden Seiten an die Bereiche B anschließen und bis zu den Fahrbahnmarkierungen 17 laufen, ist das zweite Fahrerassistenzsystem 9, hier also das LDW-System, aktiv. Wird eine in einem dieser Bereiche C liegende Relativposition des Fahrzeugs bzw. des ausgezeichneten Punktes ermittelt, so wird in jedem Fall eine vorzugsweise haptische, gegebenenfalls auch akustische oder optische Warnmeldung ausgegeben, um den Fahrer sofort zu warnen und zum aktiven Lenkeingriff aufzufordern. Eine aktive Querführung zur Unterstützung ist in diesem Bereich C nicht mehr erforderlich, es ist jedoch denkbar, auch in diesem Bereich eine aktive Querführung über das Fahrerassistenzsystem 10 zuzulassen. D. h., dass letztlich der Abschnitt B sich bis zu den Fahrbahnbegrenzungen 17 erstreckt, wobei im Abschnitt C die LDW-Funktion zusätzlich überlagert wird.

Die Breite der Abschnitte A, B und C ist veränderlich, sie orientiert sich selbstverständlich an der erfassten realen Fahrspurbreite.

## Patentansprüche

1. Kraftfahrzeug umfassend
- ein Lenkrad (2),
- eine über das Lenkrad (2) drehbare Lenksäule (3),
- eine querverschiebbare Steuerstange (4), die mit zwei zu lenkenden Rädern (5) bewegungsgekoppelt ist,
- ein der Lenksäule (3) zugeordnetes Überlagerungsgetriebe (6), über das ein durch Drehen des Lenkrads (2) erzeugter Drehwinkel mit einem über einen mit dem Überlagerungsgetriebe (6) gekoppelten Stellmotor (7) erzeugten Drehwinkel zur Erzeugung eines der Bewegung der Steuerstange (4) dienenden Überlagerungsdrehwinkel überlagerbar ist,
- sowie ein Fahrerassistenzsystem (10) mit einer Einrichtung (14) zum Geben eines separaten, der Bewegung der Steuerstange (4) dienenden Lenkmoments zum aktiven Querführen des Kraftfahrzeugs (1),
wobei
das Überlagerungsgetriebe (6) über den Stellmotor (7) derart verstellbar ist, dass eine infolge der Gabe eines separaten Lenkmoments durch die Einrichtung (14) verursachte Drehung der Lenksäule (3) derart zumindest teilweise kompensiert wird, dass die resultierende tatsächliche Lenkraddrehbewegung verglichen mit der aus dem gegebenen Lenkmoment resultierenden theoretischen Lenkraddrehbewegung geringer ist,
**dadurch gekennzeichnet,**
**dass** das Fahrerassistenzsystem (10) eine Erfassungseinrichtung (15) zur Ermittlung der Fahrspur (16) umfasst und der aktiven Querführung des Fahrzeugs (1) bei Erfassen einer vorbestimmten Relativposition des Kraftfahrzeugs (1) zu einer Fahrspurbegrenzung (17) dient, wobei die zumindest teilweise Kompensation nur bei Erfassen einer in einem definierten Teilbereich (A) der systemseitig bestimmten Fahrspurbreite liegenden Relativposition des Kraftfahrzeugs (1) erfolgt.

2. Kraftfahrzeug nach Anspruch 1,
**dadurch gekennzeichnet,**
**dass** eine vollständige Kompensation derart erfolgt, dass das Lenkrad (2) nicht bewegt wird.

3. Kraftfahrzeug nach Anspruch 1 oder 2,
**dadurch gekennzeichnet,**
**dass** das Fahrerassistenzsystem (10) eine die Einrichtung (14) ansteuernde Steuerungseinrichtung (11) umfasst, die mit dem Stellmotor (7) oder einer den Stellmotor (7) steuernden Steuerungseinrichtung (8) kommuniziert.

4. Kraftfahrzeug nach einem der vorangehenden Ansprüche,
**dadurch gekennzeichnet,**
**dass** der Teilbereich (A) in der Fahrspurmitte liegt.

5. Kraftfahrzeug nach einem der vorangehenden Ansürche
**dadurch gekennzeichnet,**
**dass** bei Erfassen einer in weiteren im Bereich der Fahrbahnbegrenzung (17) liegenden definierten Teilbereichen (C) der erfassten Fahrspurbreite liegenden Relativposition, gegebenenfalls zusätzlich zur aktiven Querführung, über ein akustisches und/oder haptisches und/oder optisches Anzeigemittel (12) ein Warnsignal gebbar ist.

6. Verfahren zum Betrieb eines Kraftfahrzeugs umfassend ein Lenkrad, eine über das Lenkrad drehbare Lenksäule, eine querverschiebbare Steuerstange, die mit zwei zu lenkenden Rädern bewegungsgekoppelt ist, ein der Lenksäule zugeordnetes Überlagerungsgetriebe, über das ein durch Drehen des Lenkrads erzeugter Drehwinkel mit einem über einen mit dem Überlagerungsgetriebe gekoppelten Stellmotor erzeugten Drehwinkel zur Erzeugung eines der Bewegung der Steuerstange dienenden Überlagerungsdrehwinkel überlagerbar ist, sowie ein Fahrerassistenzsystem mit einer Einrichtung zum Geben eines separaten, der Bewegung der Steuerstange dienenden Lenkmoments zum aktiven Querführen des Kraftfahrzeugs, wobei das Fahrerassistenzsystem eine Erfassungseinrichtung zur Ermittlung der Fahrspur umfasst und der aktiven Querführung des Fahrzeugs bei Erfassen einer vorbestimmten Relativposition des Kraftfahrzeugs zu einer Fahrspurbegrenzung dient, wobei
bei Erfassung einer in einem definierten ersten Teilbereich der systemseitig bestimmten Fahrspurbreite liegenden Relativposition das Überlagerungsgetriebe über den Stellmotor derart verstellt wird, dass eine infolge der Gabe eines separaten Lenkmoments durch die Einrichtung verursachte Drehung der Lenksäule derart zumindest teilweise kompensiert wird, dass die resultierende tatsächliche Lenkraddrehbewegung verglichen mit der aus dem gegebenen Lenkmoment resultierenden theoretischen Lenkraddrehbewebung geringer ist, während bei Erfassung einer in einem oder zwei seitlich neben dem ersten Teilbereich liegenden zweiten Teilbereichen liegenden Relativposition lediglich eine aktive Querführung ohne kompensierender Verstellung des Überlagerungsgetriebes erfolgt, und wobei bei Erfassung einer in fahrspurrandseitig liegenden dritten Teilbereichen liegenden Relativposition anstelle oder zusätzlich zur aktiven Querführung ein akustisches und/oder optisches und/oder haptisches Warnsignal gegeben wird.

7. Verfahren nach Anspruch 6,
**dadurch gekennzeichnet,**
**dass** der erste Teilbereich in der Fahrspurmitte liegt und sich zu jeder Seite ein zweiter Teilbereich und an diesen ein dritter Teilbereich unmittelbar anschließt.

8. Verfahren nach Anspruch 6 oder 7,
**dadurch gekennzeichnet,**
**dass** im ersten Teilbereich eine vollständige Kompensation derart erfolgt, dass das Lenkrad nicht bewegt wird.

## Claims

1. Motor vehicle comprising
- a steering wheel (2),
- a steering column (3) which can be rotated by means of the steering wheel (2),
- a laterally displaceable control rod (4), which is coupled so as to transmit movement to two wheels (5) which are to be steered,
- a variable ratio gear unit (6) which is assigned to the steering column (3) and by means of which a rotational angle which is generated by means of a servomotor (7) coupled to the variable ratio gear unit (6) can be superimposed on a rotational angle generated by rotating the steering wheel (2), in order to generate a superimposition rotational angle which serves to move the control rod (4),
- and a driver assistance system (10) having a device (14) for generating a separate steering torque, serving to move the control rod (4), in order to actively laterally guide the motor vehicle (1),
wherein
the variable ratio gear unit (6) can be adjusted by means of the servomotor (7) in such a way that a rotation of the steering column (3) which is caused by the generation of a separate steering torque by means of the device (14) is at least partially compensated in such a way that the resulting actual rotational movement of the steering wheel is less than the theoretical rotational movement of the steering wheel resulting from the generated steering torque, **characterized**
**in that** the driver assistance system (10) comprises a detection device (15) for determining the lane (16) and for performing active lateral guidance of the vehicle (1) when a predetermined relative position of the motor vehicle (1) in relation to a lane boundary (17) is detected, wherein the at least partial compensation takes place only when a relative position of the motor vehicle (1) lying in a defined partial region (A) of the lane width determined at the system is detected.

2. Motor vehicle according to Claim 1,
**characterized**
**in that** a complete compensation is carried out such that the steering wheel (2) is not moved.

3. Motor vehicle according to Claim 1 or 2,
**characterized**
**in that** the driver assistance system (10) comprises a control device (11) which actuates the device (14) and which communicates with the servomotor (7) or with a control device (8) which controls the servomotor (7).

4. Motor vehicle according to one of the preceding claims,
**characterized**
**in that** the partial region (A) lies in the centre of the lane.

5. Motor vehicle according to one of the preceding claims,
**characterized**
**in that**, when a relative position lying in further defined partial regions (C) of the detected lane width, which lie in the region of the carriageway boundary (17), is detected, under certain circumstances in addition to the active lateral guidance, a warning signal can be generated by means of an acoustic and/or haptic and/or visual display means (12).

6. Method for operating a motor vehicle comprising a steering wheel, a steering column which can be rotated by means of the steering wheel, a laterally displaceable control rod, which is coupled so as to transmit movement to two wheels which are to be steered, a variable ratio gear unit which is assigned to the steering column and by means of which a rotational angle which is generated by means of a servomotor coupled to the variable ratio gear unit can be superimposed on a rotational angle generated by rotating the steering wheel, in order to generate a superimposition rotational angle which serves to move the control rod, and a driver assistance system having a device for generating a separate steering torque, serving to move the control rod, in order to actively laterally guide the motor vehicle, wherein the driver assistance system comprises a detection device for determining the lane and serves for performing active lateral guidance of the vehicle when a predetermined relative position of the motor vehicle in relation to a lane boundary is detected,
wherein
when a relative position which lies in a defined first partial region of the lane width which is determined at the system is detected, the variable ratio gear unit is adjusted by means of the servomotor in such a way that a rotation of the steering column caused by the generation of a separate steering torque by means of the device is at least partially compensated in such a way that the resulting actual rotational movement of the steering wheel is less than the theoretical rotational movement of the steering wheel resulting from the generated steering torque, while, when a relative position lying in one or two second partial regions lying laterally next to the first partial region is detected, only active lateral guidance without compensating adjustment of the variable ratio gear unit takes place, and wherein, when a relative position lying in third partial regions lying at the lane edge is detected, an acoustic and/or visual and/or haptic warning signal is generated instead of or in addition to the active lateral guidance.

7. Method according to Claim 6,
**characterized**
**in that** the first partial region lies in the centre of the lane and adjoins, on each side, a second partial region and a third partial region directly adjoins said second partial region.

8. Method according to Claim 6 or 7,
**characterized**
**in that** complete compensation is carried out in the first partial region such that the steering wheel is not moved.

## Revendications

1. Véhicule automobile comprenant :
- un volant de direction (2),
- une colonne de direction (3) pouvant tourner au moyen du volant de direction (2),
- une barre de commande (4) déplaçable transversalement, qui est accouplée de manière mobile à deux roues (5) à diriger,
- une transmission superposée (6) associée à la colonne de direction (3), par le biais de laquelle un angle de rotation produit par la rotation du volant de direction (2) peut être superposé à un angle de rotation produit par le biais d'un moteur de réglage (7) accouplé à la transmission superposée (6), pour produire un angle de rotation de superposition servant au déplacement de la barre de commande (4),
- ainsi qu'un système d'assistance au conducteur (10) comprenant un dispositif (14) pour fournir un couple de direction séparé, servant au déplacement de la barre de commande (4), pour le guidage transversal actif du véhicule automobile (1),
la transmission superposée (6) pouvant être déplacée par le biais du moteur de réglage (7) de telle sorte qu'une rotation de la colonne de direction (3) provoquée à la suite de la fourniture d'un couple séparé par le dispositif (14) soit compensée au moins en partie de telle sorte que le mouvement de rotation effectif résultant du volant de direction soit inférieur comparé avec le mouvement de rotation théorique du volant de direction résultant du couple de direction donné,
**caractérisé en ce que**
le système d'assistance au conducteur (10) comprend un dispositif de détection (15) pour détecter la voie de circulation (16) et le guidage transversal actif du véhicule (1), lorsqu'une position relative prédéterminée du véhicule automobile (1) est déterminée, sert à limiter la voie de circulation (17), la compensation au moins partielle n'ayant lieu que lorsqu'une position relative du véhicule automobile (1) située dans une région partielle définie (A) de la largeur de la voie de circulation déterminée par le système est détectée.

2. Véhicule automobile selon la revendication 1,
**caractérisé en ce**
**qu'**une compensation complète a lieu de telle sorte que le volant de direction (2) ne soit pas déplacé.

3. Véhicule automobile selon la revendication 1 ou 2,
**caractérisé en ce que**
le système d'assistance au conducteur (10) comprend un dispositif de commande (11) commandant le dispositif (14), qui communique avec le moteur de réglage (7) ou un dispositif de commande (8) commandant le moteur de réglage (7).

4. Véhicule automobile selon l'une quelconque des revendications précédentes,
**caractérisé en ce que**
la région partielle (A) est située au milieu de la voie de circulation.

5. Véhicule automobile selon l'une quelconque des revendications précédentes,
**caractérisé en ce que**
lorsque l'on détecte une position relative située dans d'autres régions partielles définies (C) de la largeur de la voie de circulation détectée, situées dans la région de la limitation de la voie de circulation (17), un signal d'avertissement peut être produit éventuellement en plus du guidage transversal actif, par le biais d'un moyen indicateur (12) acoustique et/ou tactile et/ou optique.

6. Procédé pour faire fonctionner un véhicule automobile, comprenant un volant de direction, une colonne de direction pouvant tourner au moyen du volant de direction, une barre de commande déplaçable transversalement, qui est accouplée de manière mobile à deux roues à diriger, une transmission superposée associée à la colonne de direction, par le biais de laquelle un angle de rotation produit par la rotation du volant de direction peut être superposé à un angle de rotation produit par le biais d'un moteur de réglage accouplé à la transmission superposée, pour produire un angle de rotation de superposition servant au déplacement de la barre de commande, ainsi qu'un système d'assistance au conducteur comprenant un dispositif pour fournir un couple de direction séparé, servant au déplacement de la barre de commande, pour le guidage transversal actif du véhicule automobile, le système d'assistance au conducteur comprenant un dispositif de détection pour détecter la voie de circulation et le guidage transversal actif du véhicule, lors de la détection d'une position relative prédéterminée du véhicule automobile, servant à limiter la voie de circulation,
la transmission superposée étant réglée par le biais du moteur de réglage lors de la détection d'une position relative se trouvant dans une première région partielle définie de la largeur de la voie de circulation déterminée par le système, de telle sorte qu'une rotation de la colonne de direction provoquée à la suite de la fourniture d'un couple de direction séparé par le dispositif soit compensée au moins en partie de telle sorte que le mouvement de rotation du volant de direction effectif résultant soit inférieur, comparé avec le mouvement de rotation du volant de direction théorique résultant du couple de direction donné, tandis que lors de la détection d'une position relative située dans une ou deux deuxièmes régions partielles situées latéralement à côté de la première région partielle, seulement un guidage transversal actif a lieu sans déplacement compensatoire de la transmission superposée, et à la détection d'une position relative se trouvant dans des troisièmes régions partielles situées du côté des bords de la voie de circulation, un signal d'avertissement acoustique et/ou optique et/ou tactile est fourni au lieu ou en plus du guidage transversal actif.

7. Procédé selon la revendication 6,
**caractérisé en ce que**
la première région partielle est située au milieu de la voie de circulation et une deuxième région partielle s'y raccorde de chaque côté, et à celle-ci se raccorde directement une troisième région partielle.

8. Procédé selon la revendication 6 ou 7,
**caractérisé en ce que**
dans la première région partielle a lieu une compensation complète, de telle sorte que le volant de direction ne soit pas déplacé.
